(19) **Europäisches Patentamt / European Patent Office / Office européen des brevets**

(11) **EP 2 739 380 B1**

(12) # EUROPÄISCHE PATENTSCHRIFT

(45) Veröffentlichungstag und Bekanntmachung des Hinweises auf die Patenterteilung:
**21.10.2015 Patentblatt 2015/43**

(21) Anmeldenummer: **12748409.5**

(22) Anmeldetag: **03.08.2012**

(51) Int Cl.:
*B01F 3/08* (2006.01)  *B01F 5/06* (2006.01)
*B01F 5/10* (2006.01)  *B01J 3/00* (2006.01)
*B01J 3/02* (2006.01)  *B01J 3/04* (2006.01)
*B01F 15/02* (2006.01)

(86) Internationale Anmeldenummer:
**PCT/EP2012/065245**

(87) Internationale Veröffentlichungsnummer:
**WO 2013/017685 (07.02.2013 Gazette 2013/06)**

(54) **MISCH- UND DOSIERVORRICHTUNG ZUM MISCHEN UND DOSIEREN VON CHEMIKALIEN**

MIXING AND METERING DEVICE FOR MIXING AND METERING CHEMICALS

DISPOSITIF DE MÉLANGE ET DE DOSAGE POUR MÉLANGER ET DOSER DES PRODUITS CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011 DE 202011050903 U**

(43) Veröffentlichungstag der Anmeldung:
**11.06.2014 Patentblatt 2014/24**

(73) Patentinhaber: **Blum, Holger**
**9053 Teufen (CH)**

(72) Erfinder: **Blum, Holger**
**9053 Teufen (CH)**

(74) Vertreter: **Puschmann Borchert Bardehle**
**Patentanwälte Partnerschaft mbB**
**Postfach 10 12 31**
**80086 München (DE)**

(56) Entgegenhaltungen:
**EP-A1- 2 336 093    WO-A1-99/04892**
**DE-A1-102006 026 254    US-A- 2 382 871**

**Beschreibung**

Die Erfindung betrifft Vorrichtung zum Mischen und Dosieren von flüssigen Chemikalien sowie Gewinnung eines flüssigen Reaktionsgutes unter Vakuumbedingungen.

DE 10 2006 026 254 A1 offenbart eine Vorrichtung entsprechend dem Oberbegriff des Anspruch 1. Das Dokument offenbart eine Vorrichtung zum Erzeugen einer Komponentenmischung aus mindestens zwei Komponenten mit mindestens einem Einlasskanal zum Zuführen mindestens einer Komponente, mit einem Förderkanal zum Führen der Komponentenmischung und mit mindestens einem Auslasskanal zum Abgriff der Komponentenmischung. Der Förderkanal ist umlaufend ausgeführt. Der Förderkanal ist auf einen Volumenstrom ausgelegt, der gleich oder grösser ist als der Volumenstrom der maximal abzugreifenden Komponentenmischung. In dem Förderkanal ist eine kontinuierlich arbeitende Pumpe vorgesehen, die für den Umlauf der Komponentenmischung im Förderkanal sorgt. In dem Förderkanal ist mindestens ein Mischelement vorgesehen, wobei der mindestens eine Einlasskanal im Bereich des Mischelements angeordnet ist.

US 2 382 871 A offenbart eine Mischvorrichtung zum Mischen von flüssigen Chemikalien, die eine Rohrschlange und eine Kreislaufpumpe in der Rohrschlange sowie einen Zulauf und einen Ablauf im unteren Bereich der Rohrschlange aufweist. Die Rohrschlange ist mäanderförmig ausgelegt.

Der Erfindung liegt die Aufgabe zugrunde, eine Misch- und Dosiervorrichtung zum Mischen und Dosieren von Chemikalien unter Vakuumbedingungen anzugeben, die auch unter nichtstationären Bedingungen und insbesondere unter Neigung und Bewegung den Misch- und Dosiervorgang sicher und befriedigend durchführen kann.

Dazu weist eine Misch- und Dosiervorrichtung zum Mischen und Dosieren von flüssigen Chemikalien die Merkmale von Anspruch 1 auf. Durch die aufrechtstehende Anordnung der Rohrschlange und die räumliche Anordnung des Staurohres und des Fallrohres gegenüber der Rohrschlange arbeitet die erfindungsgemäße Vorrichtung in vorteilhafter Weise sicher und befriedigend auch bei Lageänderungen bei nicht stationärem Betrieb, einer Neigung oder einer Bewegung der Vorrichtung beispielsweise, wenn diese auf einem Fahrzeug montiert ist.

Eine bevorzugte Ausführungsform der der erfindungsgemäßen Misch- und Dosiervorrichtung ist dadurch gekennzeichnet, dass die Dosierventile stopfbuchsenlos und in Form von Faltenbalgventilen ausgeführt sind. Derartige Dosierventile eignen sich besonders gut für die Regelung von flüssigen Chemikalien.

Eine weitere bevorzugte Ausführungsform der der erfindungsgemäßen Misch- und Dosiervorrichtung ist dadurch gekennzeichnet, dass die Kreislaufpumpe eine Kreiselpumpe ist, wodurch eine effektive und für die Chemikalien schonende Förderleistung der Pumpe sichergestellt wird.

Eine weitere bevorzugte Ausführungsform der der erfindungsgemäßen Misch- und Dosiervorrichtung ist dadurch gekennzeichnet, dass die Rohrschlange mäanderartig als aufrecht stehende Flachrohrschlange ausgeführt ist, wobei der Platzbedarf der Rohrschlange herab gesetzt wird, ohne dass die Rohrschlange in ihrem Volumen kleiner gemacht wird.

Eine weitere bevorzugte Ausführungsform der erfindungsgemäßen Misch- und Dosiervorrichtung ist dadurch gekennzeichnet, dass das Staurohr mit einem Abflussflansch der Rohrschlange über einen Flanschstutzen an einem T-Stück verbunden ist, das in das der Kreislaufstrom derart eingeführt wird, dass er in dem T-Stück in seiner Bewegungsrichtung umgelenkt wird. Bei dieser Anordnung des T-Stücks als Staustelle trifft der aus der Rohrschlange austretende Kreislaufstrom direkt auf eine geschlossene Rückwand des T-Stücks, so dass dadurch und durch die Umlenkung des Kreislaufstroms in dem T-Stück eine Stauwirkung erzielt wird. Dieser Stauwirkung kann in vorteilhafter Weise dazu benutzt werden, flüssiges Reaktionsgut aus dem Kreislaufstrom abzuziehen mit Hilfe eines Vakuums, das am Ausgang der Vorrichtung ansteht.

Eine weitere bevorzugte Ausführungsform der der erfindungsgemäßen Misch- und Dosiervorrichtung ist dadurch gekennzeichnet, dass oben an das T-Stück ein Rohr-Reduzierstück angeschlossen ist, wobei der Strom des Reaktionsgutes in Strömungsrichtung nach der Staustelle in Bezug auf Turbulenzen beruhigt wird.

Eine weitere bevorzugte Ausführungsform der der erfindungsgemäßen Misch- und Dosiervorrichtung ist dadurch gekennzeichnet, dass an das T-Stück ein Steigrohr angeschlossen ist, durch das das Staurohr über das Niveau der Rohrschlange hinaus verlängert ist, wodurch in vorteilhafter Weise eine weitere Beruhigung des Reaktionsgutstromes erreicht wird.

Eine weitere bevorzugte Ausführungsform der erfindungsgemäßen Misch- und Dosiervorrichtung ist dadurch gekennzeichnet, dass Durchmesser des Fallrohres geringer ist als der Durchmesser des Staurohres, wobei insbesondere der Innendurchmesser des Staurohres, der Rohrleitungen (außer dem Fallrohre) sowie der Innendurchmesser der Rohrschlange so gewaehlt ist, dass bei vorgegebener Pumpleistung der Kreislaufpumpe und vorgegebener dynamischer Viskosität des Reaktionsgutes die Reynolds-Zahl > 2300 ist, und dass der Innendurchmesser des Fallrohres so weit ist, dass die Filmdicke des an der Innenseite des Fallrohres herabfließenden Reaktionsgutes ein Bruchteil des Innendurchmessers des Fallrohres ist. Dadurch wird in vorteilhafter Weise der Tatsache Rechnung getragen, dass einerseits in der Rohrschlange und dem Staurohr eine ausreichend starke Strömung fließen sollte, während in dem Fallrohr nur ein Flüssigkeitsfilm aus dem Reaktionsgut an den Wänden herunter rieseln sollte.

Eine weitere bevorzugte Ausführungsform der erfindungsgemäßen Misch- und Dosiervorrichtung ist dadurch gekennzeichnet, dass die hydraulische Verbindung zwischen dem Fallrohr und dem Steigrohr eine Transferleitung aufweist. Damit kann in vorteilhafter Weise erreicht werden, dass die Reaktionsgutflüssigkeit in der Transferleitung nicht den gesamten Querschnitt der Leitung einnimmt, dass das in dem Fallrohr vorhandene Vakuum auch in der Transferleitung wirksam werden kann.

Eine weitere bevorzugte Ausführungsform der erfindungsgemäßen Misch- und Dosiervorrichtung ist dadurch gekennzeichnet, dass die Transferleitung höhenmäßig oberhalb des obersten Rohres der Rohrschlange angeordnet ist, wobei das Reaktionsgut von der Staustelle nach oben und über das Fallrohr nach unten geführt wird, in dem ein Vakuum erzeugt wird. Damit wird zusätzlich sichergestellt, dass, wenn die Vorrichtung in Betrieb Schwankungen und Lageänderungen unterworfen ist, der Betrieb in der Rohrschlange nicht beeinträchtigt wird, da das Flüssigkeitsniveau in der Rohrschlange immer niedriger ist als in der Transferleitung.

Eine weitere bevorzugte Ausführungsform der erfindungsgemäßen Misch- und Dosiervorrichtung ist dadurch gekennzeichnet, dass eine Entleerungsleitung mit einem Entleerungsventil zwischen dem Saugstutzen der Kreislaufpumpe und dem Fallrohr vorgesehen ist. Dadurch kann die Vorrichtung auf einfache Weise nach Betriebsstilllegung entleert werden, um Nachteile der Nachwirkungen der Chemikalien zu vermeiden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1     eine Seitenansicht der Vorrichtung;

Fig. 2     eine perspektivische Darstellung der Vorrichtung in einem anderen Blickwinkel als Fig. 1, und

Fig. 3     eine Detaildarstellung des Fallrohrs und des Staurohrs mit angehängten Armaturen,

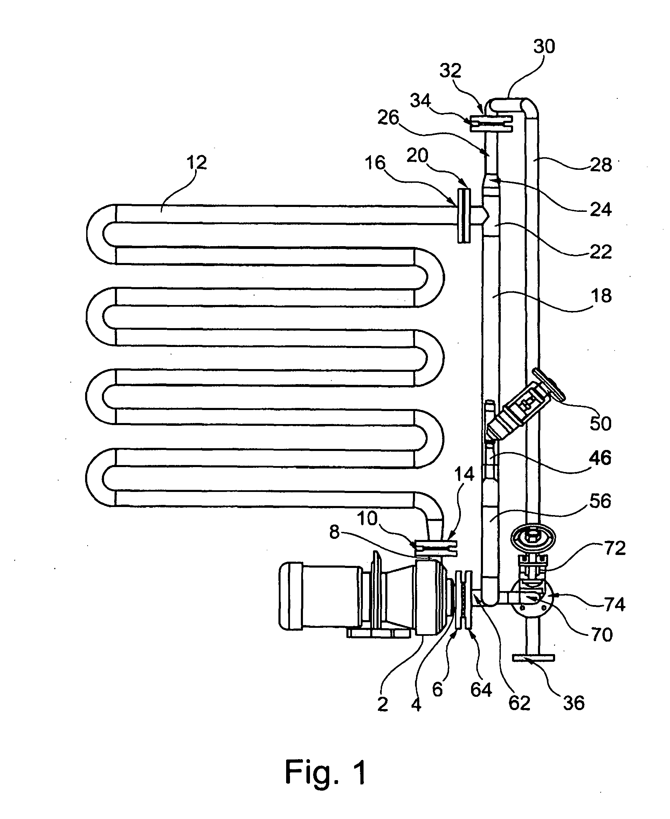

Die erfindungsgemäße Vorrichtung nach Fig. 1 umfasst eine Misch- und Zirkulationspumpe 2, vorzugsweise in Form einer Kreiselpumpe. Die Misch- und Zirkulationspumpe 2 weist einen Saugstutzen 4 mit Flansch 6 und einen Druckstutzen 8 mit Flansch 10 auf.

Die erfindungsgemäße Vorrichtung weist eine Rohrschlange 12 auf, deren Volumeninhalt so bemessen ist, dass die in die Vorrichtung eindosierten Chemikalien eine für die chemische Umsetzung ausreichende Verweilzeit haben. Vorzugsweise ist die Rohschlange 12 mäanderartig als Flachrohrschlange ausgeführt, wie in Fig. 1 gezeigt ist.

Der durch die Misch- und Zirkulationspumpe 2 bewegte Kreislaufstrom der Chemikalien tritt unten in die Rohrschlange 12 durch einen Flanschstutzen 14 ein. Der bewegte Kreislaufstrom der Chemikalien tritt oben aus Rohrschlange 12 durch einen Flanschstutzen 16 aus.

Die erfindungsgemäße Vorrichtung weist ein Staurohr 18 auf. Das Staurohr 18 ist im Winkel von 90 Grad zur Flussrichtung des aus der Rohrschlange 12 austretenden Kreislaufstromes angeordnet. Im erfindungsgemäßen Staurohr beginnt selbsttätig die hydraulische Abtrennung des flüssigen Reaktionsgutes vom Kreislaufstrom, Das Staurohr 18 ist mit dem Flanschstutzen 16 über einen Flanschstutzen 20 und ein T-Stück 22 hydraulisch verbunden. Erfindungsgemäß ist oben an das T-Stück 22 ein Rohrreduzierstück 24 angeschweißt. Das Rohrreduzierstück 24 beseitigt die Strömungswirbel des Kreislaufstromes, so dass das ausgeschleuste flüssige Reaktionsgut hydraulisch beruhigt in das Steigrohr 26 fließt.

Die erfindungsgemäße Vorrichtung weist ein Fallrohr 28 auf. Die hydraulische Verbindung zwischen dem Fallrohr 28 und dem Steigrohr 26 wird durch eine Transferleitung 30 bewirkt. Der Durchmesser des. Fallrohres 28 ist geringer als der Durchmesser des Staurohres 18 und ist so bemessen, dass das aus der Vorrichtung ausgeschleuste flüssige Reaktionsgut nur als Flüssigkeitsfilm an der Innenseite des Fallrohres 28 herabrieselt. Infolgedessen herrscht im Fallrohr 28 Vakuum, wenn am unteren Ende des Fallrohres 28, am Vakuumflansch 36 der Vorrichtung eine Vakuumvorlage angeschlossen ist. Die Transferleitung 30 ist nur partiell mit dem ausgeschleusten flüssigen Reaktionsgut gefüllt, Infolgedessen herrscht in dieser Leitung 30 ebenfalls der gleiche Unterdruck wie im Fallrohr 28.

Wie aus Fig. 1 ersichtlich ist, ist die Transferleitung 30 höhenmäßig oberhalb des obersten Rohres der Rohrschlange 12 angebracht und mittels der Flanschstutzens 32 und 34 mit dem Steigrohr 26 verbunden. Dementsprechend wirkt die Transferleitung 30 als selbsttätige Niveauregulierung, indem in der ganzen Vorrichtung das ausgeschleuste flüssige Reaktionsgut nicht höher als bis zur Transferleitung 30 steigen kann.

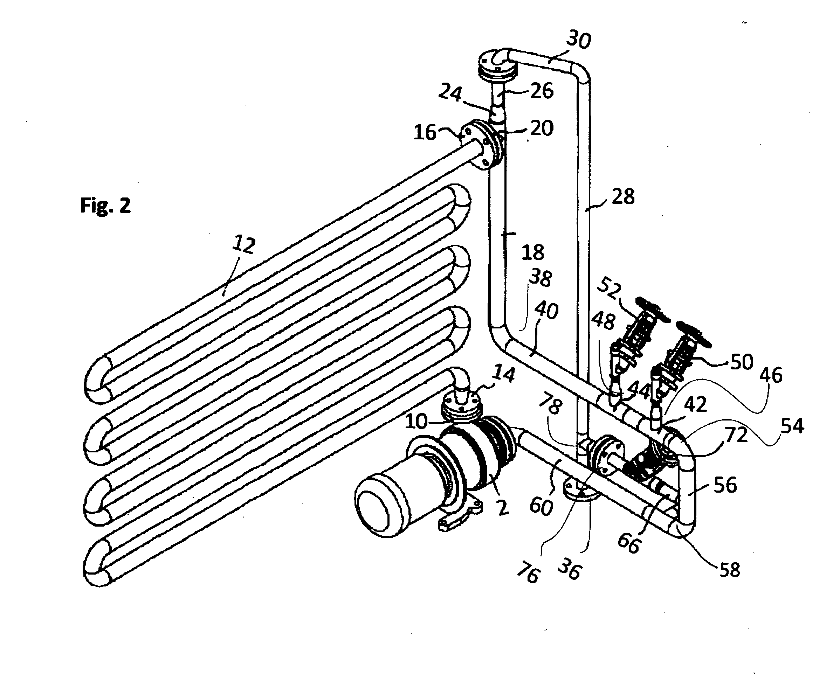

Wie aus Fig. 2 erkennbar ist, mündet das Staurohr 18 über einen 90 Grad Rohrbogen 38 in eine horizontale obere Dosierleitung 40. In diese obere Dosierleitung 40 sind T-Stücke 42 und 44 eingesetzt. Diese T-Stücke 42 und 44 haben 90 Grad Rohrabzweigungen, welche einen geringeren Durchmesser als die obere Dosierleitung 40 aufweisen.

An die Rohrabzweigungen der T-Stücke 42 und 44 sind konische Reduzierstück 46 und 48 angeschweißt, und daran sind weiterhin die Dosierventile 50 und 52 vorgesehen. Vorzugsweise sind die Dosierventile 50 und 52 stopfbuchsenlos und in Form von Faltenbalgventilen ausgeführt.

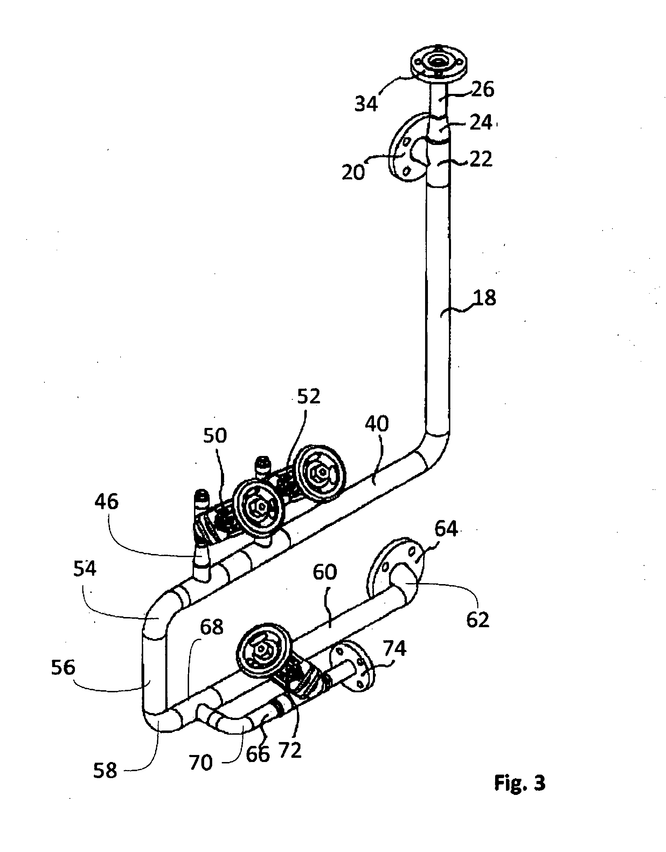

Wie aus Fig. 2 und aus Fig. 3 ersichtlich, ist die obere horizontale Dosierleitung 40 mittels eines 90 Grad Rohrbogens 54 mit der vertikalen Verbindungsrohrleitung 56 verbunden, und diese ist wiederum mittels eines 90 Grad Rohrbogens 58 mit der unteren horizontalen Dosierleitung 60 hydraulisch verbunden.

Der Kreislaufstrom der Reaktionsflüssigkeit fließt aus der Rohrschlange 12, abzüglich der ausgeschleusten Reaktionsflüssigkeit, in das Staurohr 18 und durch die Rohrleitungen 40, 56 und 60 sowie durch den 90 Grad Rohrbogen 62 welcher mittels des Flansch 64 mit dem Saugstutzen 4 der Zirkulationspumpe 1 verbunden ist.

Der Innendurchmesser $d_{Rohr}$ des Staurohres, der Rohrleitungen 40 , 56, 60 sowie der Innendurchmesser der Rohrschlange ist so gewaehlt , dass bei vorgegebener Pumpleistung $Q_{pumpe}$ ($m^3$/s) der Kreislaufpumpe 2 und vorge-gebener dynamischer Viskosität $\mu R$ ($m^2$/s) des Reaktionsgutes für die dimensionslose Reynolds-Zahl RE gilt:

$$RE = Q_{Pumpe} / (0{,}25^* \pi \; ^* d_{Rohr} \; ^* \mu R \;) \; > 2300 \; ist.$$

Der Innendurchmesser $d_{iF}$ (m) des Fallrohres 28 ist so weit, dass in Bezug auf die Filmdicke $S_{Film}$ (m) des an der Innenseite des Fallrohres 28 herabfliessenden Reaktiongutes gilt:

$$S_{Film} \leq d_{iF}/6.$$

Die erfindungsgemäße Vorrichtung weist auch eine Entleerungsleitung 66 auf. Diese Entleerungsleitung 66 zweigt über ein T-Stück 68 und einen 90 Grad Rohrbogen 70 von der unteren horizontalen Dosierleitung 60 ab und ist über ein Absperrventil 72 mit einem Flansch 74 hydraulisch verbunden. Der Flansch 74 ist an einen Flansch 76 angeschlossen, welcher wiederum an ein T-Stück 78 angeschweißt ist. Das T-Stück 78 ist, wie aus Fig. 2 ersichtlich ist, ein Teil des Fallrohrs 28.

Während des Dosierbetriebes ist das Absperrventil 72, welches vorzugsweise stopfbuchsenlos und in Form eines Faltenbalgventiles ausgeführt ist, geschlossen. Nach Beendigung des Dosierbetriebes kann das Absperrventil 72 geöffnet werden wodurch das gesamte flüssige Reaktionsgut aus der Rohrschlange 12, der Kreislaufpumpe 2 und der Dosierleitung 40, 56, 60 aus der Vorrichtung am Vakuumflansch 36 selbsttätig heraus fließt, sodass die erfindungsge-mäße Vorrichtung flüssigkeitsfrei wird.

**Bezugzeichenliste**

2	Zirkulationspumpe
4	Saugstutzen
6	Saugflansch
8	Druckstutzen
10	Druckflansch
12	ebene Rohrschlange
14	Einlaufflansch
16	Abflussflansch
18	Staurohr
20	Verbindungsflansch
22	T-Stück
24	Rohr-Reduzierstück
26	Steigrohr
28	Fallrohr
30	Transferleitung
32	Flansch Transferleitung
34	Flansch Steigrohr
36	Vakuumflansch
38	Rohrbogen
40	Obere Dosierleitung

42    T-Stück verringerte Abzweigung
44    T-Stück verringerte Abzweigung
46    konisches Reduzierstück
48    konisches Reduzierstück
50    Dosierventil
52    Dosierventil
54    Rohrbogen
56    Verbindungsleitung
58    Rohrbogen
60    Untere Dosierleitung
62    Rohrbogen Dosierleitung
64    Dosierflansch
66    Entleerungsleitung
68    T-Stück verringerte Abzweigung
70    Rohrbogen Entleerungsleitung
72    Entleerungsventil
74    Flansch Entleerungsleitung
76    Flansch am T-Stück
78    T-Stück

## Patentansprüche

1.  Misch- und Dosiervorrichtung zum Mischen und Dosieren von flüssigen Chemikalien umfassend:

    eine Kreislaufpumpe (2) mit einem Saugstutzen und einem Druckstutzen,
    eine Rohrschlange (12), deren Volumeninhalt so bemessen ist, dass die in die Vorrichtung eindosierten Chemikalien eine für eine chemische Umsetzung ausreichende Verweilzeit haben,
    ein Staurohr (18), das den aus der Rohrschlange (12) austretenden Kreislaufstrom unter Bildung einer Staustelle von dem Auslass der Rohrschlange (12) zu einer Dosierleitung (40) führt,
    die zwischen dem Staurohr (18) und dem Saugstutzen der Kreislaufpumpe (2) angeordnet ist und wenigsten zwei Dosierventile (50, 52) umfasst, sowie
    ein Fallrohr (28), das mit dem Staurohr (18) verbunden ist und einen Vakuumflansch (36) zum Anschluss der Misch- und Dosiervorrichtung an eine Vakuumvorrichtung aufweist, **dadurch gekennzeichnet, dass** die Rohrschlange (12) aufrecht stehend angeordnet ist und unten einen Einlauf und oben einen Auslauf hat, dass das Staurohr (18) den aus der Rohrschlange (12) austretenden Kreislaufstrom von dem Auslass der Rohrschlange (12) nach unten zu der Dosierleitung (40) führt, die horizontal zwischen dem Staurohr (18) und dem Saugstutzen der Kreislaufpumpe (2) angeordnet ist, und dass das Fallrohr (28) mit einem oberhalb des Niveaus der Rohrschlange (12) liegenden Ende des Staurohrs (18) verbunden ist und am unteren Ende einen Vakuumflansch zum Anschluss der Misch- und Dosiervorrichtung an eine Vakuumvorrichtung aufweist.

2.  Misch- und Dosiervorrichtung nach Anspruch 1, **dadurch gekennzeichnet, dass** die Dosierventile (50, 52) stopfbuchsenlos und in Form von Faltenbalgventilen ausgeführt sind.

3.  Misch- und Dosiervorrichtung nach Anspruch 1 oder 2, **dadurch gekennzeichnet, dass** die Kreislaufpumpe (2) eine Kreiselpumpe ist.

4.  Misch- und Dosiervorrichtung nach Anspruch 1, **dadurch gekennzeichnet, dass** die Rohschlange mäanderartig als aufrecht stehende Flachrohrschlange (12) ausgeführt ist.

5.  Misch- und Dosiervorrichtung nach einem der Ansprüche 1 bis 4, **dadurch gekennzeichnet, dass** das Staurohr (18) mit einem Abflussflansch der Rohrschlange (12) über einen Flanschstutzen an einem T-Stück (22) verbunden ist.

6.  Misch- und Dosiervorrichtung nach Anspruch 5, **dadurch gekennzeichnet, dass** oben an das T-Stück (22) ein Rohr-Reduzierstück (24) angeschlossen ist.

7.  Misch- und Dosiervorrichtung nach Anspruch 5 oder 6, **dadurch gekennzeichnet, dass** an das T-Stück (22) ein Steigrohr (26) angeschlossen ist, durch das das Staurohr (18) über das Niveau der Rohrschlange (12) hinaus verlängert ist.

8. Misch- und Dosiervorrichtung nach Anspruch 1, **dadurch gekennzeichnet, dass** der Innendurchmesser des Fallrohres (28) geringer ist als der Innendurchmesser des Staurohr (18).

9. Misch- und Dosiervorrichtung nach Anspruch 8, **dadurch gekennzeichnet, dass** der Innendurchmesser $d_{Rohr}$ des Staurohres (18), der Rohrleitungen (40, 56, 60) sowie der Innendurchmesser der Rohrschlange (12) so gewaehlt ist, dass bei vorgegebener Pumpleistung Pumpe ($m^3$/s) der Kreislaufpumpe (2) und vorgegebener dynamischer Viskositaet $\mu R$ ($m^2$/s) des Reaktionsgutes für die Reynolds-Zahl RE gilt:

$$RE = Q_{Pumpe} / (0{,}25 * \pi * d_{Rohr} * \mu R) > 2300 \text{ ist, und dass}$$

der Innendurchmesser $d_{iF}$ (m) des Fallrohres (28) so weit ist, dass in Bezug auf die Filmdicke $S_{Film}$ (m) des an der Innenseite des Fallrohres (28) herabfliessenden Reaktiongutes gilt:

$$S_{Film} \leq d_{iF}/6.$$

10. Misch- und Dosiervorrichtung nach Anspruch 7, **dadurch gekennzeichnet, dass** die hydraulische Verbindung zwischen dem Fallrohr (28) und dem Steigrohr (26) eine Transferleitung (30) aufweist.

11. Misch- und Dosiervorrichtung nach Anspruch 10, **dadurch gekennzeichnet, dass** die Transferleitung (30) höhenmäßig oberhalb des obersten Rohres der Rohrschlange (12) angeordnet ist

12. Misch- und Dosiervorrichtung nach einem der Ansprüche 1 bis 11, **dadurch gekennzeichnet, dass** eine Entleerungsleitung (66) mit einem Entleerungsventil (72) zwischen der Saugstutzen der Kreislaufpumpe (2) und dem Fallrohr (28) vorgesehen ist.

**Claims**

1. Mixing and metering device for mixing and metering liquid chemicals comprising:

   a circulation pump having a suction port and a pressure port,
   a pipe coil (12), the content volume of which is dimensioned such that the chemicals metered into the device have a residence time sufficient for the chemical reaction,
   a choke tube (18) which guides the circulation stream exiting from the pipe coil (12), with formation of a choke point, from the outlet of the pipe coil (12) to a metering conduit (40) which is arranged between the choke tube (18) and the suction port of the circulation pump (2), and at least two metering valves (50,52) and also
   a falling tube (28) which is connected to the choke tube (18) and has vacuum flange (36) for connection of the mixing and metering device to a vacuum device,
   **characterized in that** the tube coil (12) is arranged standing up vertically and has an inlet at the bottom and an outlet at the top that the choke tube (18) guides the circulation stream downwards from the outlet of the tube coil (12) downwards to the metering conduit (40) which is horizontally arranged between the choked tube (18) and the suction stub of the circulation pump (2), and the falling tube (28) is connected to an end of the choke tube (18) arranged above the level of the tube coil (12), and, at the lower end, comprises a vacuum flange for connection of the mixing and metering device to a vacuum device.

2. Mixing and metering device according to claim 1, **characterized in that** the metering valves (50, 52) are glandless and in the shape of bellows valves.

3. Mixing and metering device according to claim 1 or 2, **characterized in that** the circulation pump (2) is a rotary pump.

4. Mixing and metering device according to claim 1, **characterized in that** the tube coil is arranged like a meander as an upright standing flat tube coil (12).

5. Mixing and metering device according to one of the claims 1 to 4, **characterized in that** the choke tube (18) is connected to a drainage flange of the tube coil (12) through a flange stub at a T-piece (22).

6. Mixing and metering device according to claim 5, **characterized in that** at the top at the T-piece (22) a tube reduction piece (24) is connected.

7. Mixing and metering device according to claim 5 or 6, **characterized in that**, at the T-piece (22) a riser tube (26) is connected by which the choke tube (18) is prolonged beyond the level of the tube coil (12).

8. Mixing and metering device according to claim 1, **characterized in that** the inner diameter of the falling tube (28) is lower than the inner diameter of the choke tube (18)

9. Mixing and metering device according to claim 8, **characterized in that** the inner diameter $d_{tube}$ of the choke tube (18), of the tube conduits (40, 56, 60) as well as the inner diameter of the tube coil (12) are selected such that, with a predetermined pump capacity $Q_{pump}$ ($m^3/s$) of the circulation pump (2) and with predetermined dynamic viscosity $\mu R$ ($m^2/s$) of the reaction material, for the Reynolds number RE

$$RE = Q_{pump} /(0,25 * \Pi * d_{tube} \, \mu R) > 2300$$

is true and that
the inner diameter $d_{iF}$ (m) of the falling tube (28) is so wide that, with respect to the film thickness $S_{film}$ (m) of the reaction material flowing downwards at the inner side of the falling tube (28):

$$S_{film} \leq d_{iF}/6$$

is true.

10. Mixing and metering device according to claim 7, **characterized in that** the hydraulic connection between the falling tube (28) and the riser tube (26) comprise a transfer conduit (30).

11. Mixing and metering device according to claim 10, **characterized in that** the transfer conduit is arranged with respect to its height level, above the upper tube of the tube coil (12).

12. Mixing and metering device according to one of the claims 1 to 11, **characterized in that** a drainage conduit (66) with a drainage valve (72) is provided between the suction stub of the circulation pump (2) and the falling tube (28).

## Revendications

1. Dispositif de mélange et de dosage pour mélanger et doser des produits chimiques liquides comprenant :

une pompe de circulation (2) munie d'une tubulure d'aspiration et d'une tubulure de refoulement,
un serpentin (12) dont le contenu est mesuré de manière à ce que les produits chimiques dosés dans le dispositif disposent d'un temps de séjour suffisant pour être transformés chimiquement,
un tube de Pitot (18), qui dirige le courant de circulation sortant du serpentin (12), avec formation d'un blocage, de la sortie d'évacuation du serpentin vers une conduite de dosage (40) qui est disposée entre le tube de Pitot (18) et la tubulure d'aspiration de la pompe de circulation (2) et qui comprend au moins deux clapets de dosage (50, 52),
ainsi qu'un tube de descente (28) raccordé au tube de Pitot (18) et comportant une bride à vide (36) pour raccorder le dispositif de mélange et de dosage à un dispositif à vide, **caractérisé en ce que** le serpentin (12) est disposé à la verticale et présente un orifice d'entrée dans sa portion inférieure, puis un orifice d'évacuation dans sa portion supérieure, que le tube de Pitot (18) achemine le courant de circulation sortant du serpentin (12) de l'orifice d'évacuation dans la portion inférieure du serpentin jusqu'à la conduite de dosage (40) disposée à l'horizontale entre le tube de Pitot (18) et les tubulures d'aspiration de la pompe de circulation (2), et que le tube de descente (28) est relié avec une extrémité du tube de Pitot (18) située au-dessus du niveau du serpentin (12) et que son extrémité inférieure présente une bride à vide pour le raccordement du dispositif de mélange et de dosage à un dispositif sous vide.

2. Dispositif de mélange et de dosage selon la revendication 1, **caractérisé en ce que** les clapets de dosage (50, 52) sont sans presse-étoupe et ont la forme de soupapes à soufflet.

3. Dispositif de mélange et de dosage selon les revendications 1 ou 2, **caractérisé en ce que** la pompe de circulation (2) est une pompe centrifuge.

4. Dispositif de mélange et de dosage selon la revendication 1, **caractérisé en ce que** le serpentin est configuré en forme de méandre comme un serpentin tubulaire (12) en position verticale.

5. Dispositif de mélange et de dosage selon l'une des revendications 1 à 4, **caractérisé en ce que** le tube de Pitot (18) est relié à une bride d'évacuation du serpentin (12) par une tubulure à bride sur un tube en T (22).

6. Dispositif de mélange et de dosage selon la revendication 5, **caractérisé en ce qu'**une pièce de réduction de tube (24) est connectée au tube en T (22) par le haut.

7. Dispositif de mélange et de dosage selon les revendications 5 ou 6, **caractérisé en ce qu'**un tube montant (26) est relié au tube en T (22) et qu'il fait en sorte de prolonger le tube de Pitot (18) au-delà du niveau du serpentin (12).

8. Dispositif de mélange et de dosage selon la revendication 1, **caractérisé en ce que** le diamètre interne du tube de descente (28) est inférieur au diamètre interne du tube de Pitot (18).

9. Dispositif de mélange et de dosage selon la revendication 8, **caractérisé en ce que** le diamètre interne $d_{Tube}$ du tube de Pitot (18) et de la tuyauterie (40, 56, 60), ainsi que le diamètre interne du serpentin tubulaire (12) sont choisis de sorte que, à une puissance de pompage donnée $Q_{Pompe}$ (m3/s) de la pompe de circulation (2) et à une viscosité dynamique donnée $\mu R$ (m2/s) de la matière réactionnelle, la formule suivante s'applique pour le nombre de Reynolds :

$$RE = Q_{Pompe} / (0,25 * 1T * d_{Tube} \cdot * \mu R) > 2300, \text{ et que}$$

le diamètre interne diF (m) du tube de descente (28) est élevé au point que la formule suivante s'applique en relation à l'épaisseur de film $S_{Film}$ (m) de la matière réactionnelle s'écoulant à l'intérieur du tube de descente (28) :

$$S_{Film} \, S \, d_{iF}/6.$$

10. Dispositif de mélange et de dosage selon la revendication 1, **caractérisé en ce que** le raccordement hydraulique entre le tube de descente (28) et le tube montant présente une conduite de transfert (30).

11. Dispositif de mélange et de dosage selon la revendication 10, **caractérisé en ce que** la conduite de transfert (30) est disposée au-dessus du tube le plus élevé du serpentin tubulaire (12).

12. Dispositif de mélange et de dosage selon l'une des revendications 1 à 11, **caractérisé en ce que** une conduite de vidange (66) avec un clapet de vidange (72) est disposée entre la tubulure d'aspiration de la pompe de circulation (2) et le tube de descente (28).

Fig. 1

EP 2 739 380 B1

Fig. 2

10

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006026254 A1
- US 2382871 A